# EUROPEAN PATENT SPECIFICATION

(11) **EP 4 468 495 B1**
(45) Date of publication and mention of the grant of the patent: **28.10.2026**
(21) Application number: 23907404.0
(22) Date of filing: 08.11.2023
(51) Int. Cl.: H01M 10/04, H01M 50/107, H01M 50/152, H01M 50/249, H01M 50/342, H01M 50/578

(54) **BATTERY CELL, BATTERY PACK, AND VEHICLE INCLUDING SAME**
BATTERIEZELLE, BATTERIEPACK UND FAHRZEUG DAMIT
ÉLÉMENT DE BATTERIE, BLOC-BATTERIE ET VÉHICULE LE COMPRENANT

(30) Priority: 23.12.2022 KR 20220183384; 18.05.2023 KR 20230064622
(43) Date of publication of application: 27.11.2024
(73) Proprietor: LG Energy Solution, Ltd., Seoul 07335 (KR)
(72) Inventor: LEE, Da-Som, Daejeon 34122 (KR); KO, Kwang-Hun, Daejeon 34122 (KR); KIM, Do-Gyun, Daejeon 34122 (KR); CHO, Sung-Min, Daejeon 34122 (KR); CHOI, Su-Ji, Daejeon 34122 (KR); HWANGBO, Kwang-Su, Daejeon 34122 (KR)
(74) Representative: Goddar, Heinz J.
(86) International application number: PCT/KR2023/017855
(87) International publication number: WO 2024/136118

(56) References cited:
- EP-A2- 4 044 358
- WO-A1-2018/030836
- WO-A1-2022/139163
- CN-A- 109 216 596
- JP-A- 2007 080 598
- KR-A- 20140 094 204
- KR-A- 20180 018 280
- KR-A- 20180 018 280
- KR-A- 20220 108 011
- US-A1- 2013 273 401
- US-A1- 2019 386 272
- US-A1- 2021 336 309

## Description

### TECHNICAL FIELD

The present disclosure relates to a battery cell, a battery pack, and a vehicle including the same.

### BACKGROUND ART

Secondary batteries, which are easy to apply depending on the product group and have electrical characteristics such as high energy density and the like, are generally used in electric vehicles (EVs) or hybrid electric vehicles (HEVs) that are driven by an electrical drive source, as well as in portable devices. These secondary batteries are attracting attention as a new energy source for improving eco-friendliness and energy efficiency because they have the primary advantage of being able to dramatically reduce the use of fossil fuels and no by-product is generated due to energy use.

Current secondary batteries widely used include lithium ion batteries, lithium polymer batteries, nickel cadmium batteries, nickel hydrogen batteries, nickel zinc batteries, and the like. The operating voltage of this unit secondary battery cell, that is, the unit battery cell, is approximately 2.5V to 4.5V. Therefore, when an output voltage higher than this is required, a battery pack may be configured by connecting a plurality of battery cells in series. In addition, a battery pack may be configured by connecting multiple battery cells in parallel depending on the charge/discharge capacity required for the battery pack. Accordingly, the number of battery cells included in the battery pack may be set in various ways depending on the required output voltage or charge/discharge capacity.

Meanwhile, in a BDCR (beading/crimping portion) structure of a cylindrical battery cell, a venting portion serves to lower the internal pressure of the battery cell caused by gas through breakage of a notch provided in the venting portion in the process in which the internal pressure of the battery cell increases, thereby preventing fire.

However, if the pressure inside the battery cell rises, the housing cover bends, so that lifting occurs between the housing cover and a gasket surrounding the housing cover, resulting in slippage of the housing cover, so there is a risk of leakage of electrolyte and the like from the battery cell.

However, if the thickness of the notch is gradually reduced to control the venting time, there is a problem with risks related to processing efficiency and product safety.

KR 20180018280 A discloses a cap assembly for a secondary battery, and a secondary battery thereof. The cap assembly for a secondary battery of the disclosure comprises: a safety vent which is a circular metal plate, and having a central part corresponding to a central region thereof and a peripheral part corresponding to a peripheral region of the central part, wherein the central part includes a conductive contact part for forming a conductive path to secure the electrical conductivity of a current transferred from a power generation device to the outside, and a fracture junction part for forming a second conductive path at the center of the central part; a cap down part having a central hole to face the safety vent to allow the fracture junction part to be exposed, and having a buttress part closely adhering to the peripheral part; and a sub-plate joined to the fracture junction part, having a notch part formed therearound, and having an outer circumferential surface to be interposed between the cap down part and an insulating layer. Accordingly, the capacity of the power generation device increases in a secondary battery having the same size, and the contact resistance between terminals is low, and also, component costs are reduced. In addition, electrical shorts of a secondary battery generated due to dissolution or loss of a gasket between a battery can and a safety vent by energy or forces caused by an electrical short generated in the outside, can be prevented.

WO 2022/139163 A1 discloses a secondary battery that comprises an electrode assembly; a battery case in which the electrode assembly is accommodated and of which the upper part is open; and a cap assembly which is coupled to the open upper part of the battery case. The cap assembly comprises a safety vent having a notch part formed therein, the gap formed by the notch part being closed.

US 2019/386272 A1 discloses a cylindrical battery cell that includes a jelly-roll type electrode assembly, configured to have a structure in which a positive electrode and a negative electrode are wound in a state in which a separator is disposed between the positive electrode and the negative electrode; a cylindrical battery case having no beading part; a cap assembly located at the open upper end of the cylindrical battery case, the cap assembly including a safety vent configured to rupture in order to exhaust gas when pressure in the battery case increases; a gasket mounted so as to surround the outer circumference of the safety vent in order to maintain insulation between the cap assembly and the cylindrical battery case; and a washer for fixing the cap assembly to the cylindrical battery case, the washer coupled to an upper surface of an outer circumferential portion of the open upper end of the cylindrical battery case.

US 2021/336309 A1 discloses a secondary battery capable of improving venting pressure distribution. A secondary battery including an electrode assembly, a can member that accommodates the electrode assembly, and a top cap assembly that covers an opening of the can member. The top cap assembly includes a top cap positioned at the uppermost portion and a safety vent part positioned below the top cap. The safety vent part includes a rupture portion that is ruptured when an internal pressure within the can member equals or exceeds a predetermined pressure, a rupture notch portion that defines a boundary of the rupture portion, and a bending notch portion which is spaced apart from the rupture notch portion toward a center of the rupture portion on a bottom surface of the rupture portion, and the bending notch portion is bent when the internal pressure within the can member increases.

US 2013/273401 A1 provides a cylindrical secondary battery, comprising an electrode assembly having a cathode plate, an anode plate, and a separator interposed therebetween; a case for receiving the electrode assembly; a cap assembly for sealing an open-end of the case; and a gasket interposed between the case and the cap assembly, wherein the gasket is made of a polymer resin having a melting point of 200° C or higher and a hardness of 100D or less.

WO 2018/030836 A1 discloses a cap assembly for a secondary battery and a secondary battery including the cap assembly. The cap assembly includes: a safety vent made of a circular metal plate and consisting of a central portion corresponding to the central area of the metal plate and a peripheral surrounding the central portion, the central portion including a current-carrying contact forming a first conductive path through which an electric current generated from a power generating device flows to the outside and a breakable junction forming a second conductive path at the center of the central portion; a cap-down opposite to the safety vent, having a central hole through which the breakable junction is exposed, and including a support member in close contact with the peripheral portion; and a sub-plate joined to the breakable junction and having a notch formed around the breakable junction, the outer circumferential surface of the sub-plate and the cap-down interposing an insulating layer therebetween. The cap assembly can be used to increase the capacity of the power generating device in the secondary battery compared to when used in other secondary batteries of the same size, minimizes the contact resistance between terminals, is constructed at reduced cost, and can protect a gasket disposed between a battery can and the safety vent from being melted or lost by energy or force generated upon external electrical shorting to prevent electrical shorting of the secondary battery.

EP 4 044 358 A2 discloses a battery according to an embodiment of the present disclosure includes an electrode assembly formed by winding a first electrode, a second electrode and a separator interposed between the first electrode and the second electrode around a winding axis, wherein the first electrode includes a first uncoated region free of an active material layer, the first uncoated region being disposed adjacent to an edge of the first electrode extending along a winding direction of the electrode assembly, wherein the first uncoated region is exposed from the separator and at least a part of the first uncoated region itself is used as an electrode tab; a housing in which the electrode assembly is arranged; a first current collector including an edge portion arranged on the electrode assembly, a first uncoated region coupling portion extending inward from the edge portion towards the winding axis and coupled with the first uncoated region, and a terminal coupling portion spaced apart from the first uncoated region coupling portion; and a terminal which is coupled with the terminal coupling portion.

### SUMMARY

### Technical Problem

The present disclosure has been designed to solve the problems of the related art, and therefore the present disclosure is intended to minimize deformation in the shape of a housing cover by providing a separate deformation induction portion, instead of the venting portion, and preferentially inducing deformation of the deformation induction portion.

In another aspect, the present disclosure is intended to suppress bending of a flat portion of a housing cover by applying a deformation induction portion, thereby securing flatness of the housing cover.

More specifically, the present disclosure is intended to prevent electrolyte from leaking due to slippage of the housing cover by preventing the generation of a gap between the housing cover and a gasket surrounding the housing cover.

In another aspect, the present disclosure is intended to control the time at which the venting portion breaks by applying a deformation induction portion.

However, the technical problems that the present disclosure seeks to solve are not limited to the above-mentioned problems, and other problems not mentioned above will be clearly understood by those skilled in the art from the description of the invention described below.

### Technical Solution

According to the present disclosure, there is provided a battery cell including: an electrode assembly that includes a first electrode, a second electrode, and a separator interposed therebetween; a battery housing configured to receive the electrode assembly through an opening formed on one side; and a housing cover configured to cover the opening and that includes a venting portion configured to cover the opening and break if internal pressure of the battery housing increases to a predetermined level or more, and a deformation induction portion spaced a predetermined distance apart from the venting portion in the radial direction and provided inward from the venting portion in the radial direction. The deformation induction portion may be configured to induce the housing cover to be preferentially deformed in an area where the deformation induction portion is formed if the internal pressure of the battery housing increases to a predetermined level or more. The battery housing comprises a beading portion formed at an end of the battery housing adjacent to the opening, and a crimping portion formed on the beading portion and bent to surround an edge of the housing cover so as to fix a housing cover onto the beading portion. The battery cell further comprises a collector electrically connected to the electrode assembly and seated on and coupled to the beading portion of the battery housing so that the collector is electrically connected to the battery housing and a sealing gasket (G1) interposed between the battery housing and the housing cover and interposed between the collector and the housing cover.

In another aspect of the present disclosure, the deformation induction portion may form a circular closed loop.

In another aspect of the present disclosure, the venting portion and the deformation induction portion may be provided in a flat portion, which is a central flat area of the housing cover.

Preferably, the deformation induction portion may be provided inward from the venting portion in the radial direction.

In another aspect of the present disclosure, the deformation induction portion may be provided in an area between the center point of the housing cover and a point corresponding to 70% of the radius of the housing cover.

Preferably, the deformation induction portion may be provided in an area between a point corresponding to 20% of the radius of the housing cover and a point corresponding to 60% of the radius of the housing cover.

In another aspect of the present disclosure, the radial length between the deformation induction portion and the venting portion may be 10 to 50% of the radial length of the housing cover.

In another aspect of the present disclosure, the deformation induction portion may include at least one of an upper deformation induction portion provided on an upper surface of the housing cover and a lower deformation induction portion provided on a lower surface of the housing cover.

Preferably, the deformation induction portion may include an upper deformation induction portion provided on an upper surface of the housing cover and a lower deformation induction portion provided on a lower surface of the housing cover.

In another aspect of the present disclosure, the thickness of the housing cover in the area where the deformation induction portion is formed may be configured to be greater than the thickness of the housing cover in the area where the venting portion is formed.

In another aspect of the present disclosure, the upper deformation induction portion and the lower deformation induction portion may be provided in a staggered state.

Meanwhile, the present disclosure provides a battery pack including at least one battery cell according to the embodiments described above.

Furthermore, the present disclosure provides a vehicle including at least one battery pack according to the embodiments described above.

### Advantageous Effects

According to the present disclosure, it is possible to minimize deformation in the shape of a housing cover by providing a separate deformation induction portion, instead of the venting portion, and preferentially inducing deformation of the deformation induction portion.

In another aspect, according to the present disclosure, it is possible to secure flatness of a housing cover by suppressing bending of a flat portion of the housing cover by application of a deformation induction portion.

More specifically, according to the present disclosure, it is possible to prevent electrolyte from leaking due to slippage of the housing cover by preventing the generation of a gap between the housing cover and a gasket surrounding the housing cover.

In another aspect, according to the present disclosure, it is possible to control the time at which the venting portion breaks by applying a deformation induction portion.

However, the effects obtainable from the present disclosure are not limited to the above-mentioned effects, and other effects not mentioned above will be clearly understood by those skilled in the art from the description of the invention described below.

### DESCRIPTION OF DRAWINGS

The accompanying drawings illustrate a preferred embodiment of the present disclosure and, together with the detailed description of the invention, serve to provide further understanding of the technical idea of the present disclosure, and thus, the present disclosure is not construed as being limited to the drawings.
FIG. 1 is a diagram illustrating a battery cell according to an embodiment of the present disclosure.
FIG. 2 is a longitudinal cross-sectional and perspective view in FIG. 1.
FIG. 3 is a longitudinal cross-sectional view of the battery cell in FIG. 1.
FIG. 4 is a diagram illustrating a housing cover according to an embodiment of the present disclosure.
FIG. 5 is a diagram illustrating a housing cover in a comparative example of the present disclosure.
FIG. 6 is a diagram illustrating the process in which the housing cover in FIG. 5 receives pressure by venting gas.
FIG. 7 is a diagram illustrating a housing cover according to an embodiment of the present disclosure.
FIG. 8 is a diagram illustrating a process in which the housing cover in FIG. 7 receives pressure by venting gas.
FIG. 9 is a diagram illustrating the specific shape of a housing cover according to an embodiment of the present disclosure.
FIG. 10 is a diagram illustrating a housing cover according to another embodiment of the present disclosure.
FIG. 11 is a diagram illustrating a housing cover according to another embodiment of the present disclosure.
FIG. 12 is a diagram illustrating a housing cover according to another embodiment of the present disclosure.
FIG. 13 is a diagram illustrating the shape of a deformation induction portion according to an embodiment of the present disclosure.
FIG. 14 is a diagram illustrating the shape of a deformation induction portion according to another embodiment of the present disclosure.
FIG. 15 is a table explaining the cross-section of a 2D model to which a deformation induction portion is applied.
FIG. 16 is a table showing the results of an experiment in which deformation patterns of a venting portion is confirmed by performing 2D static analysis on the model in FIG. 15.
FIG. 17 is a diagram illustrating a battery pack including the battery cell in FIG. 1.
FIG. 18 is a diagram illustrating a vehicle including the battery pack in FIG. 17.

### DETAILED DESCRIPTION

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Additionally, to aid understanding of the present disclosure, the accompanying drawings are not drawn to real scale and the dimensions of some elements may be exaggerated. In addition, the same reference numerals may indicate the same elements between different embodiments.

Stating that two objects to be compared are the same means that they are "substantially the same." Therefore, "substantially the same" may include the case having a deviation that is considered low in the art, for example, a deviation of less than 5%. In addition, a parameter that is uniform in a certain area may indicate that it is uniform from the average perspective.

Although "first," "second," etc. are used to describe various elements, these elements are not limited to these terms. These terms are only used to distinguish one element from another element, and unless otherwise stated, a first element may also be a second element.

Throughout the specification, unless otherwise stated, respective elements may include a single or a plurality of elements.

Configuration in which an element is disposed "in the upper portion (or lower portion)" or "at the top (or bottom)" of a target element may indicate that the element may be disposed in contact with the upper surface (or lower surface) of the target element and that another element may be interposed between the target element and the element disposed at the top (or bottom) of the target element.

Additionally, the expression "an element is 'connected,' 'coupled,' or 'fastened' to another element" should be understood that the elements may be directly connected or fastened to each other, and that another element may be "interposed" between the elements or that the elements may be "connected," "coupled," or "fastened" through other elements.

Throughout the specification, "A and/or B", unless otherwise stated, may denote A or B or A and B, and "C to D", unless otherwise stated, may denote "equal to or greater than C and equal to or less than D."

For convenience of explanation, in this specification, the longitudinal direction of a winding axis of an electrode assembly 10 wound in a jellyroll shape will be referred to as an "axial direction (Y)". In addition, the direction surrounding the winding axis will be referred to as a "circumferential direction(X)." In addition, the direction approaching or moving away from the winding axis will be referred to as a "radial direction." Among these, the direction approaching the winding axis is called a "centripetal direction," and the direction moving away from the winding axis is called a "centrifugal direction."

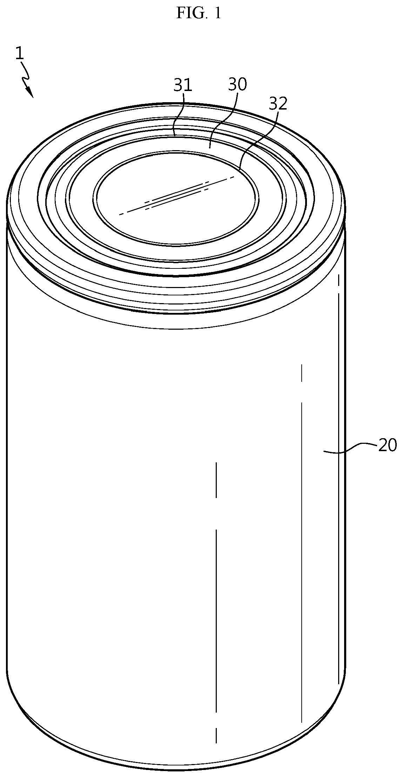

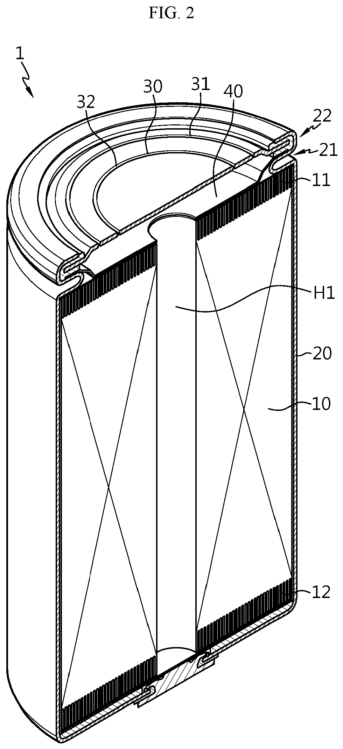

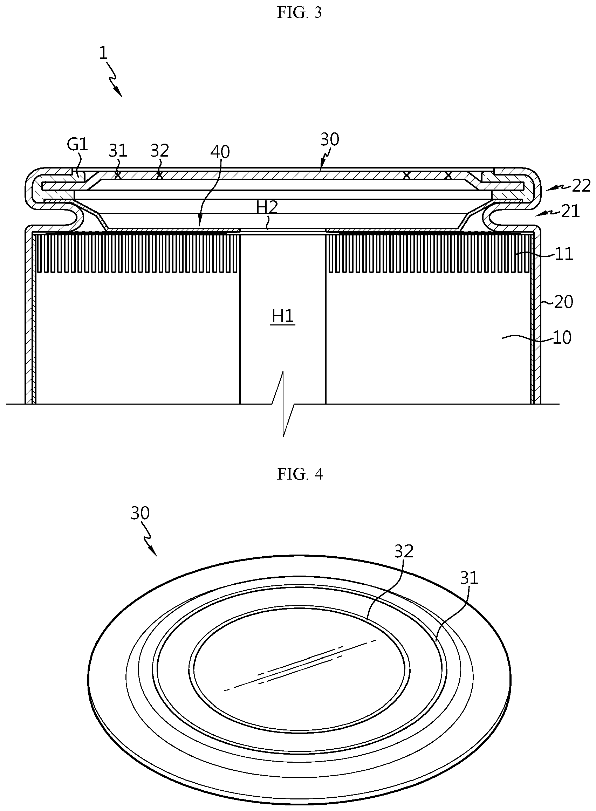

FIG. 1 is a diagram illustrating a battery cell 1 according to an embodiment of the present disclosure, and FIG. 2 is a longitudinal cross-sectional and perspective view in FIG. 1. FIG. 3 is a longitudinal cross-sectional view of the battery cell 1 in FIG. 1.

Referring to FIG. 1, the battery cell 1 according to an embodiment of the present disclosure includes an electrode assembly 10, a battery housing 20, and a housing cover 30. The battery cell 1 may further include a collector 40. The present disclosure is not limited to a specific type of battery, and may be applied to other types of batteries, such as a prismatic battery.

Referring to FIGS. 2 and 3, the electrode assembly 10 includes a first electrode tab 11 and a second electrode tab 12. Specifically, the electrode assembly 10 includes a first electrode, a second electrode, and a separator interposed therebetween. The electrode assembly 10 has a structure in which a first electrode and a second electrode are wound around a winding axis while a separator is interposed therebetween, thereby defining a core and an outer circumferential surface. That is, the electrode assembly 10 applied to the present disclosure may be a jellyroll-type electrode assembly 10. In this case, an additional separator may be provided on the outer circumferential surface of the electrode assembly 10 to insulate the same from the battery housing 20. The electrode assembly 10 may have a winding structure well known in the art without limitations.

Meanwhile, in the present disclosure, any active material known in the art may be used, without limitations, as the positive electrode active material coated on the positive electrode plate and the negative electrode active material coated on the negative electrode plate.

Referring to FIGS. 1 and 2, the battery housing 20 is a substantially cylindrical container having an opening formed on one side thereof, and is made of a conductive metal material. In general, the side face of the battery housing 20 and the bottom face opposite the opening are integrally formed. That is, the battery housing 20 is generally configured such that the top thereof in the height direction is open and the bottom is closed. The bottom face of the battery housing 20 may be configured in a substantially flat shape. The battery housing 20 receives the electrode assembly 10 through the opening formed on one side in the height direction. The battery housing 20 may also receive an electrolyte through the opening.

The battery housing 20 has a beading portion 21 formed at an end adjacent to the opening provided at the top of the battery housing 20. The battery housing 20 further includes a crimping portion 22 formed on the beading portion 21. The beading portion 21 may be configured such that the outer circumferential surface of the battery housing 20 is press-fitted to a predetermined depth. More specifically, the beading portion 21 may be configured to be press-fitted inward in the area between the opening formed on one side of the battery housing 20 and an accommodation portion that accommodates the electrode assembly 10.

The beading portion 21 is formed above the electrode assembly 10. The inner diameter of the battery housing 20 in the area where the beading portion 21 is formed is smaller than the diameter of the electrode assembly 10.

The beading portion 21 provides a support surface on which the housing cover 30 is seated. In addition, the beading portion 21 provides a support surface on which at least a portion of the edge of the collector 40 is seated and coupled. That is, at least a portion of the edge of the collector 40 of the present disclosure and/or the edge of the housing cover 30 is seated on the upper surface of the beading portion 21. In order to stably support at least a portion of the edge of the collector 40 and/or the edge of the housing cover 30, the upper surface of the beading portion 21 may be configured to extend in a direction approximately parallel to the bottom face of the battery housing 20, that is, in a direction approximately perpendicular to the side wall of the battery housing 20.

The beading portion 21 may prevent the electrode assembly 10, which may have a size approximately corresponding to the inner diameter of the battery housing 20, from coming out through the opening formed at the top of the battery housing 20 and serve as a support portion on which the housing cover 30 is seated. The upper beading portion 21 may function as a support portion for fixing the collector 40, a sealing gasket G1, and the like, as well as the housing cover 30.

The crimping portion 22 is formed on the top of the beading portion 21. The crimping portion 22 is configured to extend and bend to surround the edge of the housing cover 30 disposed above the beading portion 21. Such a configuration of the crimping portion 22 may fix the housing cover 30 onto the beading portion 21.

Referring to FIGS. 1 to 3, the housing cover 30 covers the opening formed on one side of the battery housing 20. The housing cover 30 may be fixed by the crimping portion 22 formed on the top of the battery housing 20. In this case, a sealing gasket G1 is interposed between the battery housing 20 and the housing cover 30 and between the collector 40 and the housing cover 30 to improve the fixing force and the airtightness of the battery housing 20. In this case, a contact portion 33a and/or a second contact portion may be interposed between the beading portion 21 of the battery housing 20 and the sealing gasket G1. The contact portion 33a and/or the second contact portion interposed between the beading portion 21 and the sealing gasket G1 as described above may be fixed by bending the crimping portion 22 extending upwards from the beading portion 21.

The housing cover 30 may have a substantially circular plate shape. More specifically, the housing cover 30 may include a flat portion, which is a central flat area, a flange portion, which is an area surrounded by the sealing gasket G1 and/or the crimping portion 22, and a connection portion that connects the flat portion and the flange portion. The flat portion and the flange portion may be configured to be approximately parallel to the bottom face of the battery housing 20. Here, the central axis-directional position of the flat portion may be higher than the central axis-directional position of the flange portion. Accordingly, the connection portion may have an inclined shape to connect the flat portion and the flange portion.

Meanwhile, in the present disclosure, the housing cover 30 is not a component that must function as a current path. Therefore, the sealing gasket G1 is not necessarily applied as long as the airtightness of the opening of the battery housing 20 is secured by firmly fixing the battery housing 20 and the housing cover 30 by welding or fixing using other parts.

Referring to FIGS. 1 to 3, the housing cover 30 includes a venting portion 31 and a deformation induction portion 32.

Referring to FIGS. 1 to 3, the venting portion 31 may be formed to prevent an increase in internal pressure due to gas generated inside the battery housing 20. The venting portion 31 may be configured to break when the internal pressure of the battery housing 20 increases to a predetermined level or more. For example, the venting portion 31 may be formed in a portion of the housing cover 30, and may be a more vulnerable area in structure than the surrounding area so as to easily break when internal pressure is applied thereto. For example, the venting portion 31 may be an area having a smaller thickness than the surrounding area.

That is, for some reason, a thermal event may occur inside the battery cell 1 to generate venting gas, and the pressure inside the battery housing 20 may increase due to the venting gas. At this time, the venting portion 31, corresponding to the area that is more vulnerable in structure than the surrounding area so as to easily break when the internal pressure of the battery cell 1 increases, may break when the venting gas is generated.

Referring to FIGS. 1 to 3, the deformation induction portion 32 may be provided to be spaced a predetermined distance apart from the venting portion 31 in the radial direction. Preferably, as shown in FIGS. 1 to 3, it may be provided inward from the venting portion 31 in the radial direction. The deformation induction portion 32 may be configured to be deformed if the internal pressure of the battery housing 20 increases to a predetermined level or more. In particular, the deformation induction portion 32 may be configured to induce the housing cover 30 to be preferentially deformed in the area where the deformation induction portion 32 is formed if the internal pressure of the battery housing 20 increases to a predetermined level or more.

According to this configuration, stress may be applied to the deformation induction portion 32 by the venting gas generated inside the battery cell 1, thereby causing deformation of the deformation induction portion 32. Accordingly, shape deformation of the venting portion 31 may be minimized. Accordingly, deformation of the flange portion may be suppressed to prevent electrolyte or the like from leaking out of the battery cell 1.

FIG. 4 is a diagram illustrating a housing cover 30 according to an embodiment of the present disclosure.

Referring to FIGS. 1 to 4, the venting portion 31 may be configured to form a substantially circular closed loop. Accordingly, if venting gas is ejected from the inside of the battery cell 1 so that internal pressure is applied to the housing cover 30 in the upward direction, the venting portion 31 may break, and the inner area of the circular closed loop of the housing cover 30 may rupture. Accordingly, venting may be effectively performed.

Meanwhile, referring to FIGS. 1 to 4, the deformation induction portion 32 may be configured to form a substantially circular closed loop. Accordingly, if venting gas is ejected from the inside of the battery cell 1 so that internal pressure is applied to the housing cover 30 in the upward direction, the deformation induction portion 32 may be deformed. At this time, since the deformation induction portion 32 is configured to form an approximately circular closed loop, the deformation induction portion 32 may be easily deformed.

In another aspect of the present disclosure, the venting portion 31 and the deformation induction portion 32 may be provided in a flat portion, which is a central flat area of the housing cover 30.

For example, referring to FIGS. 1 to 4, it can be seen that the deformation induction portion 32 and the venting portion 31 are provided in the flat portion of the housing cover 30.

According to this structure, since the venting portion 31 breaks and the deformation induction portion 32 is deformed and breaks within the flat area, deformation in the shape of the flange portion or the connection portion may be minimized. In particular, it is possible to prevent the flange portion from being deformed from a shape substantially parallel to the bottom face of the battery housing 20 to an inclined shape. As a result, deformation of the flange portion may be suppressed to prevent electrolyte or the like from leaking out of the battery cell 1.

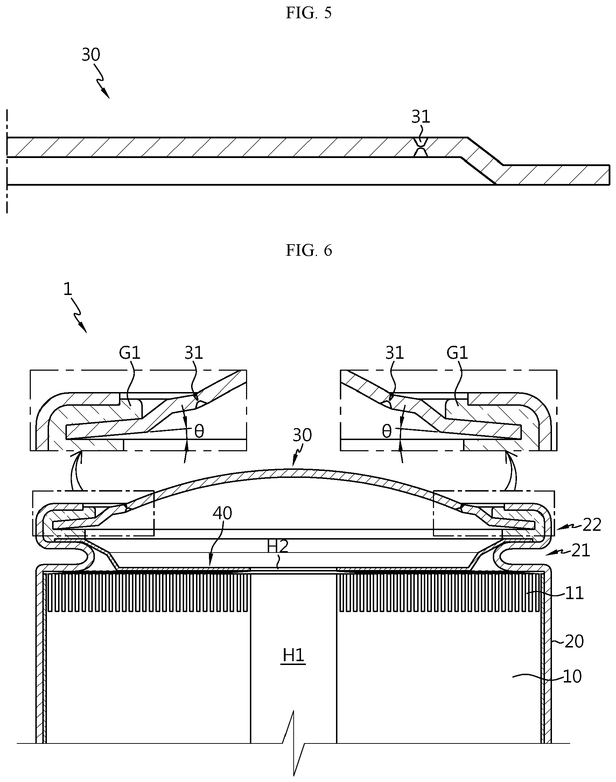

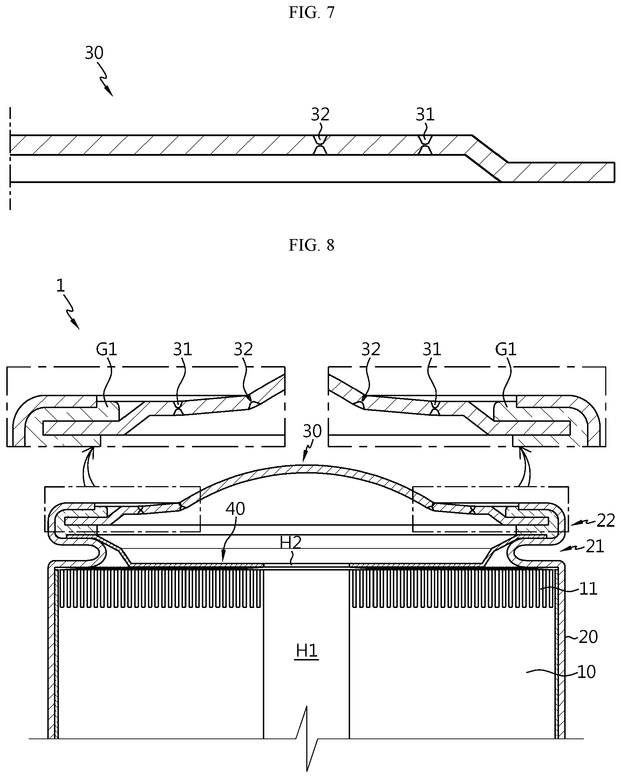

In another aspect of the present disclosure, the deformation induction portion 32 may be provided inward from the venting portion 31 in the radial direction. This will be described in detail below with reference to FIGS. 5 and 6 illustrating a comparative example of the present disclosure and FIGS. 7 and 8 illustrating an embodiment of the present disclosure.

FIG. 5 is a diagram illustrating a housing cover 30 in a comparative example of the present disclosure, and FIG. 6 is a diagram illustrating the process in which the housing cover 30 in FIG. 5 receives pressure by venting gas. Meanwhile, FIG. 7 is a diagram illustrating a housing cover 30 according to an embodiment of the present disclosure, and FIG. 8 is a diagram illustrating a process in which the housing cover 30 in FIG. 7 receives pressure by venting gas.

Referring to FIGS. 5 and 6, the conventional housing cover 30 includes only a venting portion 31, excluding a deformation induction portion 32. According to this structure, if the internal pressure of the battery cell 1 increases due to venting gas generated inside the battery cell 1, stress is concentrated in the venting portion 31, causing fracture. However, in the process of fracture of the venting portion 31, the housing cover 30 may be bent upwards under pressure, and at this time, it may become inclined in both directions, as shown in FIG. 6, based on the venting portion 31. Accordingly, the connection portion and the flange portion are also affected, so that the connection portion and the flange portion are deformed to be inclined at a predetermined angle with the bottom face of the battery housing 20. In particular, as the flange portion is deformed to be inclined at a predetermined angle with the bottom face of the battery housing 20, a gap may be produced between the flange portion and the sealing gasket G1, which eventually causes electrolyte or the like to leak out of the battery cell 1.

On the other hand, the housing cover 30 of the present disclosure includes a venting portion 31 and a deformation induction portion 32 located to be spaced a predetermined distance apart from the venting portion 31 in the radial direction. In this case, as shown in FIG. 7, the deformation induction portion 32 may be provided inward from the venting portion 31 in the radial direction.

Referring to FIG. 7, for example, the deformation induction portion 32 may be configured to be recessed inward from the surface of the housing cover 30. For example, the deformation induction portion 32 may be configured in the form of a groove or notch. Meanwhile, the recessed shape is not limited to a U-shape or V-shape, and the scope of the present disclosure encompasses any structure recessed inward from the surface of the housing cover 30. Furthermore, the shape of the deformation induction portion 32 is not limited to the groove or notch, and the deformation induction portion 32 of the present disclosure encompasses any configuration that is configured to be weaker than the surrounding area and to be more easily deformed than the surrounding area.

According to this structure, even if the internal pressure of the battery cell 1 increases, stress is applied to the deformation induction portion 32, as well as the venting portion 31. Accordingly, the shape of the deformation induction portion 32 may be changed. In particular, in the case where the deformation induction portion 32 is provided inward from the venting portion 31 in the radial direction, the deformation induction portion 32 may be dominantly deformed. In other words, the configuration in which the deformation induction portion 32 is provided inward from the venting portion 31 in the radial direction may maximize the deformation of the deformation induction portion 32. In other words, according to the present disclosure, since the deformation induction portion 32, instead of the venting portion 31, is bent, the bending of the venting portion 31 may be suppressed. Accordingly, deformation may be prevented in the surrounding area of the venting portion 31, in particular, the flange portion. As a result, the flange portion is not deformed, thereby reducing the risk of leakage of electrolyte or the like.

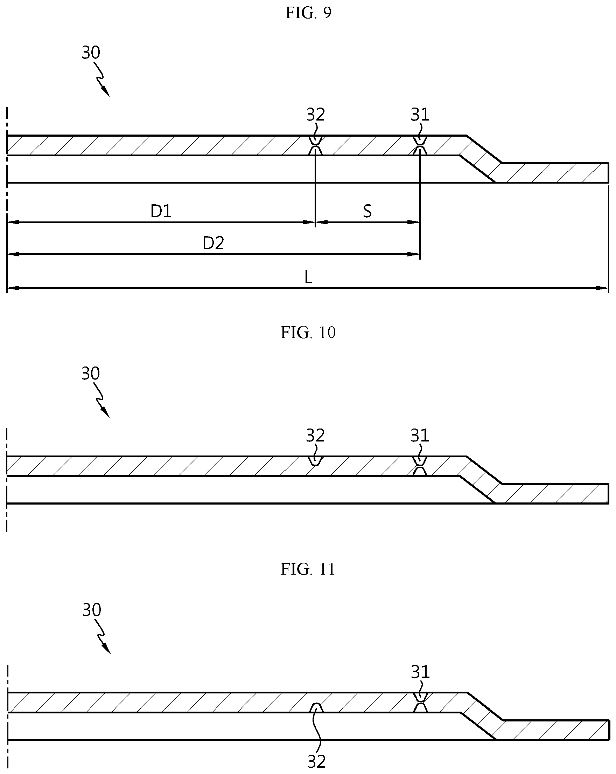

FIG. 9 is a diagram illustrating the specific shape of a housing cover 30 according to an embodiment of the present disclosure.

In another aspect of the present disclosure, the deformation induction portion 32 may be provided in the area between the center point of the housing cover 30 and a point corresponding to about 70% of the radius of the housing cover 30.

For example, the housing cover 30 shown in FIG. 9 according to an embodiment of the present disclosure has a radius of about 21.6 mm, and the venting portion 31 is provided at a distance of about 14.9 mm from the center of the housing cover 30. The deformation induction portion 32 is provided in the area between the center of the housing cover 30 and a point placed at a distance of about 14.9 mm from the center. Converted to ratios, the venting portion 31 is provided at a point corresponding to about 70% of the radius of the housing cover 30 from the center of the housing cover 30, and the deformation induction portion 32 is provided in the area between the center point of the housing cover 30 and a point corresponding to 70% of the radius of the housing cover 30. That is, according to the above configuration, the deformation induction portion 32 may be provided inward from the venting portion 31 in the radial direction.

As described above, according to the structure in which the deformation induction portion 32 is provided in the area between the center point of the housing cover 30 and the point corresponding to 70% of the radius of the housing cover 30, it is possible to secure flatness of the flange portion, compared to the case where the deformation induction portion 32 is provided outside the point corresponding to 70% of the radius of the housing cover 30. If the deformation induction portion 32 is provided outside the above point, the deformation induction portion 32 is located outwards from the venting portion 31, so that the deformation induction portion 32 may receive a greater stress than the venting portion 31. That is, since the deformation induction portion 32 where deformation occurs is closer to the flange portion, the deformation of the flange portion may become more severe. In addition, since a greater stress is applied to the deformation induction portion 32 than to the venting portion 31, breakage may occur in the deformation induction portion 32 rather than the venting portion 31. On the other hand, according to the present disclosure, since the deformation induction portion 32 where deformation occurs is far away from the flange portion, deformation of the flange portion may be suppressed.

Preferably, the deformation induction portion 32 may be provided in the area between a point corresponding to approximately 20% of the radius of the housing cover 30 and a point corresponding to approximately 60% of the radius of the housing cover 30. That is, the radial length between the deformation induction portion 32 and the venting portion 31 may be about 10 to 50% of the radial length of the housing cover 30.

For example, referring to the housing cover 30 shown in FIG. 9 according to an embodiment of the present disclosure, the lowest venting pressure acting on the venting portion 31 may be obtained in the case where the deformation induction portion 32 is provided in the area between a point corresponding to about 20% of the radius of the housing cover 30 from the center of the housing cover 30 and a point corresponding to about 60% of the radius of the housing cover 30 from the center of the housing cover 30. In this case, the venting portion 31 may be provided at a point corresponding to about 70% of the radius of the housing cover 30 from the center of the housing cover 30, so that the radial length between the deformation induction portion 32 and the venting portion 31 may be about 10 to 50% of the radial length of the housing cover 30.

More preferably, if the deformation induction portion 32 is provided in the area between a point corresponding to about 23% of the radius of the housing cover 30 from the center of the housing cover 30 and a point corresponding to about 46% of the radius of the housing cover 30 from the center of the housing cover 30, the vent pressure acting on the venting portion 31 may be secured to be even lower than that.

That is, according to the present disclosure, it is possible to minimize deformation of the area around the venting portion 31 by separately providing the deformation induction portion 32, instead of the venting portion 31, and inducing deformation of the deformation induction portion 32. That is, the leakage of electrolyte due to slippage of the flange portion may be suppressed. In addition, according to the present disclosure, the flatness of the housing cover 30 may be secured by suppressing bending of the flat portion by applying the deformation induction portion 32.

Furthermore, according to the present disclosure, it is possible to control the time at which the venting portion 31 breaks using the deformation induction portion 32. In other words, vent pressure may be expected to be controlled by a dual structure of the venting portion 31 and the deformation induction portion 32.

For reference, although the housing cover 30 of a specific configuration has been described by way of example to explain an embodiment of the present disclosure in this specification, the scope of the present disclosure is not limited to the housing cover 30 of the specific configuration, and surely encompasses housing covers 30 of other configurations in which the venting portion 31 and/or the deformation induction portion 32 are located at the same ratio to each other as that of the above embodiment.

FIG. 10 is a diagram illustrating a housing cover 30 according to another embodiment of the present disclosure, and FIG. 11 is a diagram illustrating a housing cover 30 according to another embodiment of the present disclosure.

Since the housing cover 30 according to the present embodiment is similar to the housing cover 30 in the previous embodiment, redundant descriptions of elements that are substantially the same as or similar to those in the previous embodiment will be omitted, and hereinafter, a description will be made based on the differences therefrom.

According to one aspect of the present disclosure, the deformation induction portion 32 may include at least one of an upper deformation induction portion N1 provided on the upper surface of the housing cover 30 and a lower deformation induction portion N2 provided on the lower surface of the housing cover 30.

For example, the deformation induction portion 32 may include only an upper deformation induction portion N1 provided on the upper surface of the housing cover 30, as shown in FIG. 10. As another embodiment, the deformation induction portion 32 may include only the lower deformation induction portion N2 provided on the lower surface of the housing cover 30, as shown in FIG. 11. As another embodiment, the deformation induction portion 32 may include both an upper deformation induction portion N1 provided on the upper surface of the housing cover 30 and a lower deformation induction portion N2 provided on the lower surface of the housing cover 30, as shown in FIG. 7.

In the case where the deformation induction portions 32 are provided on both surfaces of the housing cover 30, the vent pressure may be minimized. Meanwhile, in the case where the deformation induction portion 32 is provided only on the lower surface of the housing cover 30, the vent pressure may be maximized. As a result, the vent pressure may decrease depending on the formation position of the deformation induction portion 32, as follows.

When the deformation induction portion 32 is provided only on the lower surface > when the deformation induction portion 32 is provided only on the upper surface > when the deformation induction portion 32 is provided on both surfaces
Meanwhile, if the vent pressure is low, gas venting may immediately follow the thermal event occurring, which may be advantageous in safety. In addition, if the gas venting occurs immediately, the time required for deformation of the flange portion is reduced, thereby minimizing deformation of the flange portion. Accordingly, the risk of leakage of electrolyte or the like may be reduced. As a result, according to the present disclosure, it is possible to adjust the vent pressure by the application of the deformation induction portion 32. Additionally, according to the present disclosure, the flatness of the flange portion may be secured.

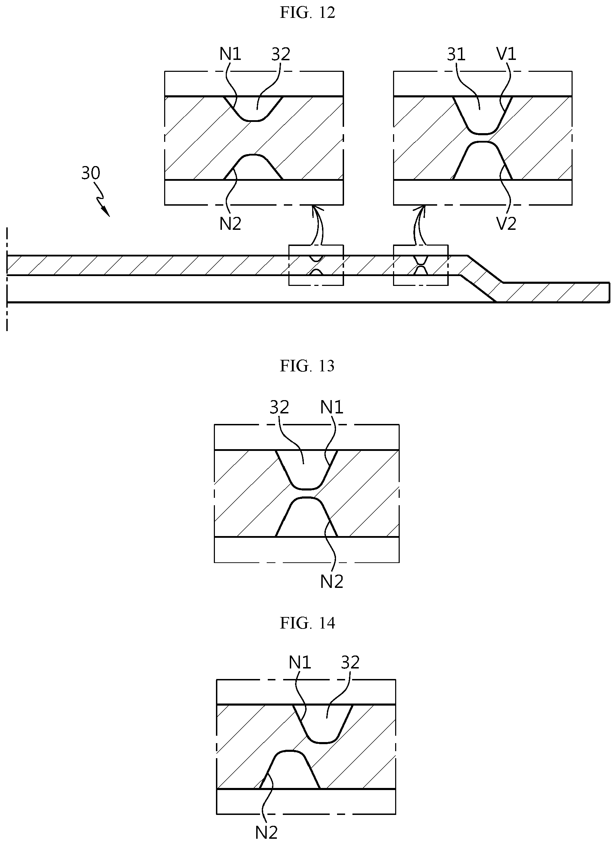

FIG. 12 is a diagram illustrating a housing cover 30 according to another embodiment of the present disclosure.

In one aspect of the present disclosure, the thickness of the housing cover 30 in the area where the deformation induction portion 32 is formed may be greater than the thickness of the housing cover 30 in the area where the venting portion 31 is formed.

For example, referring to FIG. 12, the thickness of the area where the deformation induction portion 32 is formed may be greater than the thickness of the area where the venting portion 31 is formed. In general, the size of the notch, that is, the thickness between notches, may be adjusted to control the venting time. If the thickness between notches is small, the venting portion 31 is likely to break, and if the thickness between notches is large, the venting portion 31 is not likely to break. Therefore, when constructing the deformation induction portion 32, the break time may be controlled by adjusting the thickness between notches.

According to the present disclosure, since the thickness of the area where the deformation induction portion 32 is formed is greater than the thickness of the area where the venting portion 31 is formed, the venting portion 31 may more easily break than the deformation induction portion 32. Accordingly, even when pressure is generated due to the venting gas, the venting portion 31, instead of the deformation induction portion 32, preferentially breaks.

The deformation induction portion 32 may be deformed in its shape before and after the breakage of the venting portion 31, thereby playing a role of controlling the break time of the venting portion 31. For example, when stress acts on the deformation induction portion 32, the surrounding area of the deformation induction portion 32 may be deformed from a flat shape to a bent shape, based on the deformation induction portion 32. Accordingly, the surrounding area of the deformation induction portion 32 may be inclined in both directions with respect to the deformation induction portion 32. That is, since the shape of the deformation induction portion 32, instead of the shape of the venting portion 31, is deformed, the venting portion 31 may remain in its own shape, thereby suppressing the lifting of the flange portion. As a result, this may prevent electrolyte or the like from leaking out of the battery cell 1.

FIG. 13 is a diagram illustrating the shape of a deformation induction portion 32 according to an embodiment of the present disclosure, and FIG. 14 is a diagram illustrating the shape of a deformation induction portion 32 according to another embodiment of the present disclosure.

Since the housing cover 30 according to the present embodiment is similar to the housing cover 30 in the previous embodiment, redundant descriptions of elements that are substantially the same as or similar to those in the previous embodiment will be omitted, and hereinafter, a description will be made based on the differences therefrom.

Referring to FIG. 13, the deformation induction portion 32 may include an upper deformation induction portion N1 provided on the upper surface of the housing cover 30 and a lower deformation induction portion N2 provided on the lower surface of the housing cover 30. As another embodiment of the present disclosure, as shown in FIG. 14, the upper deformation induction portion N1 and the lower deformation induction portion N2 may be provided in a staggered state.

According to the structure shown in FIG. 14, since the upper deformation induction portion N1 and the lower deformation induction portion N2 are provided in a staggered state, shear stress may be dominant in the area between the upper deformation induction portion N1 and the lower deformation induction portion N2. On the other hand, if the upper deformation induction portion N1 and the lower deformation induction portion N2 are provided on the same line in the housing cover 30 as shown in FIG. 13, tensile stress may be dominant in the area between the upper deformation induction portion N1 and the lower deformation induction portion N2. Under the same pressure acting on the area between the upper deformation induction portion N1 and the lower deformation induction portion N2, deformation occurs more easily when shear stress is applied, compared to when tensile stress is applied. Therefore, according to the present disclosure, the deformation induction portion 32 is easily deformed even if a lower vent pressure is applied. Alternatively, since the upper deformation induction portion N1 and the lower deformation induction portion N2 are in the staggered state, it may be possible to secure the same amount of deformation with a small amount of formation. As a result, a reduction in the amount of deformation may reduce damage to the mold, so that the lifespan of the housing cover 30 may be expected to increase.

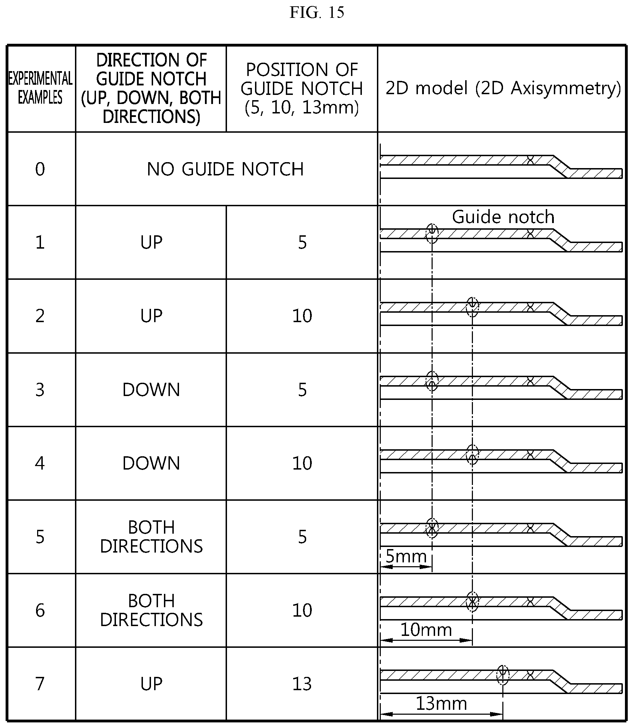

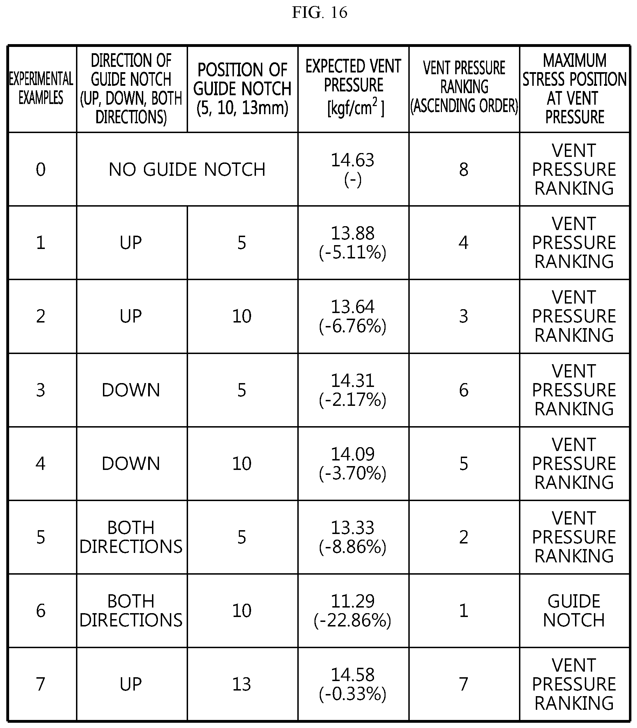

FIG. 15 is a table explaining the cross-section of a 2D model to which a deformation induction portion 32 is applied, and FIG. 16 is a table showing the results of an experiment in which deformation patterns of a venting portion 31 is confirmed by performing 2D static analysis on the model in FIG. 15.

FIG. 15 shows a cross-section from the center of the housing cover 30 to one end thereof for each case. For example, the housing cover 30 shown in FIG. 15 has a radius of about 21.6 mm, and the venting portion 31 is provided at a distance of about 14.9 mm from the center of the housing cover 30. The deformation induction portion 32 is provided in the area between the center of the housing cover 30 and a point placed at a distance of about 14.9 mm from the center. Converted to ratios, the venting portion 31 is provided at a point corresponding to about 70% of the radius of the housing cover 30 from the center of the housing cover 30, and the deformation induction portion 32 is provided in the area between the center point of the housing cover 30 and a point corresponding to 70% of the radius of the housing cover 30.

Referring to FIGS. 15 and 16, it was confirmed that the venting pressure is highest in the conventional housing cover 30 without the deformation induction portion 32 and that the vent pressure is lower in the case where the deformation induction portion 32 is provided in the area toward the center in the radial direction, based on the venting portion 31.

That is, as can be seen from the above results, according to the present disclosure to which the deformation induction portion 32 is applied, the vent pressure may be reduced. If the vent pressure is low, gas venting may immediately follow the thermal event occurring, which may be advantageous in safety. In addition, if the gas venting occurs immediately, the time required for deformation of the flange portion may be reduced, thereby minimizing deformation of the flange portion. Accordingly, the risk of leakage of electrolyte or the like may be reduced. As a result, according to the present disclosure, it is possible to adjust the vent pressure by the application of the deformation induction portion 32. Additionally, according to the present disclosure, the flatness of the flange portion may be secured.

Referring to FIGS. 15 and 16, it was confirmed that, more preferably, the venting pressure acting on the venting portion 31 is the lowest in the case where the deformation induction portion 32 is provided between a point place at a distance of about 5 mm from the center of the housing cover 30 (the point corresponding to about 23% of the radius of the housing cover 30 from the center of the housing cover 30) and a point place at a distance of about 13 mm therefrom (the point corresponding to about 60% of the radius of the housing cover 30 from the center of the housing cover 30). In particular, it was confirmed that the venting pressure acting on the venting portion 31 is even lower than that in the case where the deformation induction portion 32 is provided between a point place at a distance of about 5 mm from the center of the housing cover 30 (the point corresponding to about 23% of the radius of the housing cover 30 from the center of the housing cover 30) and a point place at a distance of about 10 mm therefrom (the point corresponding to about 46% of the radius of the housing cover 30 from the center of the housing cover 30).

However, although the venting pressure acting on the venting portion 31 is the lowest in the case where the deformation induction portion 32 is provided in both directions at a point place at a distance of about 10 mm from the center of the housing cover 30 (the point corresponding to about 46% of the radius of the housing cover 30 from the center of the housing cover 30), in this case, the maximum stress acts on the deformation induction portion 32, instead of the venting portion 31. That is, in this case, the deformation induction portion 32 is likely to break. Therefore, it is important that the venting portion 31 is provided at a position where the maximum stress occurs and that the deformation induction portion 32 is provided within an appropriate range to lower the vent pressure.

Referring to FIGS. 1 and 2, the collector 40 according to an embodiment of the present disclosure is accommodated inside the battery housing 20, is electrically connected to the electrode assembly 10, and is also electrically connected to the battery housing 20. That is, the collector 40 electrically connects the electrode assembly 10 and the battery housing 20.

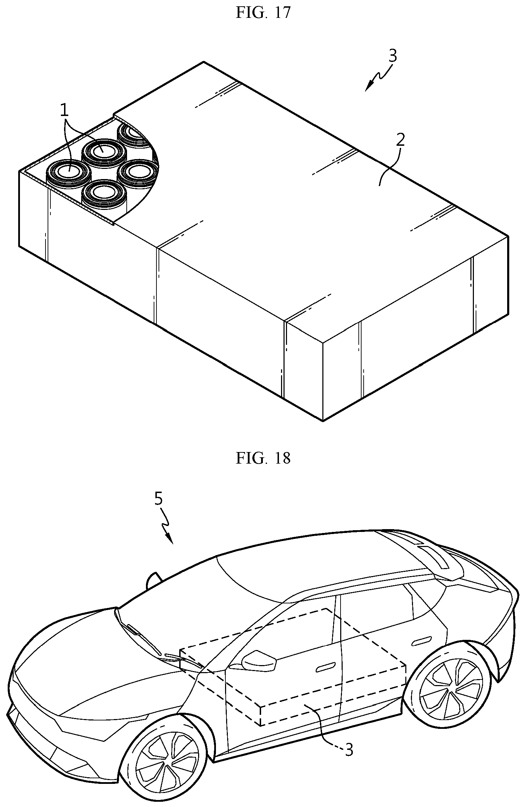

FIG. 17 is a diagram illustrating the battery pack 3 including the battery cell 1 in FIG. 1.

Referring to FIG. 17, the battery pack 3 according to an embodiment of the present disclosure includes a battery assembly in which a plurality of battery cells 1 according to an embodiment of the present disclosure described above is electrically connected and a pack housing 2 accommodating the same. For convenience of illustration, the components such as a bus bar for electrical connection, a cooling unit, and power terminals are omitted from the drawings of the present disclosure. That is, the battery pack 3 may further include the elements of the battery pack 3, which are known at the time of filing the present disclosure, such as a BMS, a pack case, a relay, a current sensor, and the like.

FIG. 18 is a diagram illustrating the vehicle 5 including the battery pack 3 in FIG. 17.

Referring to FIG. 18, the vehicle 5 according to an embodiment of the present disclosure may be, for example, an electric vehicle, a hybrid vehicle, or a plug-in hybrid vehicle, and include the battery pack 3 according to an embodiment of the present disclosure. The vehicle 5 includes a four-wheeled vehicle and a two-wheeled vehicle. The vehicle 5 operates by receiving power from the battery pack 3 according to an embodiment of the present disclosure. The vehicle 5 according to the present disclosure may further include various other elements included in the vehicle 5 in addition to the battery pack 3. For example, the vehicle 5 according to the present disclosure may further include a vehicle body, a motor, a control device such as an electronic control unit (ECU), and the like, in addition to the battery pack 3 according to the present disclosure.

According to various embodiments described above, even if gas venting occurs due to an abnormality in the battery cell 1, the present disclosure may minimize deformation of the area around the venting portion 31 by applying the deformation induction portion 32. In other words, leakage of electrolyte due to slippage of the flange portion may be suppressed. In addition, according to the present disclosure, the flatness of the housing cover 30 may be secured by suppressing bending of the flat portion by applying the deformation induction portion 32. Furthermore, according to the present disclosure, it is possible to control the time at which the venting portion 31 breaks using the deformation induction portion 32. In other words, vent pressure may be expected to be controlled by the double notch structure of the venting portion 31 and the deformation induction portion 32.

Meanwhile, although terms indicating directions such as upper and lower are used in this specification, it is obvious to those skilled in the art that these terms are only for convenience of explanation and may vary depending on the location of the target object or the location of the observer.

### [Description of Reference Numerals]

5: Vehicle
3: Battery pack
2: Pack housing
1: Battery cell
10: Electrode assembly
11: First non-coated portion
12: Second non-coated portion
H1: Winding hole
20: Battery housing
21: Beading portion
22: Crimping portion
30: Housing cover
31: Venting portion
32: Deformation induction portion
N1: Upper deformation induction portion
N2: Lower deformation induction portion
G1: Sealing gasket
40: Collector
H2: Collector hole

## Claims

1. A battery cell (1) comprising:
an electrode assembly (10) comprising a first electrode, a second electrode, and a separator interposed therebetween;
a battery housing (20) configured to receive the electrode assembly (10) through an opening formed on one side;
a housing cover (30) covering the opening of the battery housing (20);
wherein the battery housing (20) comprises:
a beading portion (21) formed at an end of the battery housing (20) adjacent to the opening, and
a crimping portion (22) formed on the beading portion (21) and bent to surround an edge of the housing cover (30) so as to fix a housing cover (30) onto the beading portion (21); and
wherein the housing cover (30) comprises:
a venting portion (31) configured to break if internal pressure of the battery housing increases to a predetermined level or more, and
a deformation induction portion (32) spaced a predetermined distance apart from the venting portion (31) in a radial direction and provided inward from the venting portion (31) in the radial direction, the deformation induction portion (32) is configured to induce the housing cover (30) to be preferentially deformed in an area where the deformation induction portion (32) is formed if the internal pressure of the battery housing increases to a predetermined level or more;
**characterized in that** the battery cell (1) further comprises:
a collector (40) electrically connected to the electrode assembly (10) and seated on and coupled to the beading portion (21) of the battery housing (20) so that the collector (40) is electrically connected to the battery housing (20); and
a sealing gasket (G1) interposed between the battery housing (20) and the housing cover (30) and interposed between the collector (40) and the housing cover (30).

2. The battery cell (1) according to claim 1,
wherein the deformation induction portion (32) forms a circular closed loop.

3. The battery cell (1) according to claim 1 or 2,
wherein the venting portion (31) and the deformation induction portion (32) are provided in a flat portion, which is a central flat area of the housing cover (30).

4. The battery cell (1) according to one of claims 1 to 3,
wherein the deformation induction portion (32) is provided in an area between a center point of the housing cover (30) and a point corresponding to 70% of the radius of the housing cover (30).

5. The battery cell (1) according one of claims 1 to 4,
wherein the deformation induction portion (32) is provided in an area between a point corresponding to 20% of a radius of the housing cover (30) and a point corresponding to 60% of the radius of the housing cover (30).

6. The battery cell (1) according to one of claims 1 to 5,
wherein a radial length between the deformation induction portion (32) and the venting portion (31) is 10 to 50% of the radial length of the housing cover (30).

7. The battery cell (1) according to one of claims 1 to 6,
wherein the deformation induction portion (32) comprises at least one of an upper deformation induction portion provided on an upper surface of the housing cover (30) and a lower deformation induction portion (32) provided on a lower surface of the housing cover (30).

8. The battery cell (1) according to claim 7,
wherein the deformation induction portion (32) comprises an upper deformation induction portion provided on an upper surface of the housing cover (30) and a lower deformation induction portion (32) provided on a lower surface of the housing cover (30).

9. The battery cell (1) according to one of claims 1 to 8,
wherein a thickness of the housing cover (30) in an area where the deformation induction portion (32) is formed is greater than the thickness of the housing cover (30) in the area where the venting portion (31) is formed.

10. The battery cell (1) according to claim 8,
wherein the upper deformation induction portion and the lower deformation induction portion (32) are provided in a staggered state.

11. The battery cell (1) according to any one of claims 1 to 10,
wherein the venting portion (31) and deformation induction portion (32) are formed as grooves or notches provided in the housing cover (30).

12. A battery pack (3) comprising at least one battery cell (1) according to any one of claims 1 to 11.

13. A vehicle (5) comprising at least one battery pack (3) according to claim 12.

## Patentansprüche

1. Batteriezelle (1), umfassend:
eine Elektrodenanordnung (10), umfassend eine erste Elektrode, eine zweite Elektrode und einen dazwischen angeordneten Separator;
ein Batteriegehäuse (20), das konfiguriert ist, um die Elektrodenanordnung (10) durch eine Öffnung aufzunehmen, die auf einer Seite ausgebildet ist;
eine Gehäuseabdeckung (30), die die Öffnung des Batteriegehäuses (20) abdeckt;
wobei das Batteriegehäuse (20) umfasst:
einen Sickenabschnitt (21), der an einem Ende des Batteriegehäuses (20) benachbart zu der Öffnung ausgebildet ist, und
einen Crimpabschnitt (22), der an dem Sickenabschnitt (21) ausgebildet und gebogen ist, um eine Kante der Gehäuseabdeckung (30) zu umgeben, um eine Gehäuseabdeckung (30) an dem Sickenabschnitt (21) zu befestigen; und
wobei die Gehäuseabdeckung (30) umfasst:
einen Entlüftungsabschnitt (31), der konfiguriert ist, um zu brechen, wenn der Innendruck des Batteriegehäuses auf ein vorbestimmtes Niveau oder mehr ansteigt, und
einen Verformungsinduktionsabschnitt (32), der um einen vorbestimmten Abstand von dem Entlüftungsabschnitt (31) in einer radialen Richtung beabstandet ist und von dem Entlüftungsabschnitt (31) in der radialen Richtung nach innen vorgesehen ist, wobei der Verformungsinduktionsabschnitt (32) konfiguriert ist, um zu bewirken, dass die Gehäuseabdeckung (30) in einem Bereich, in dem der Verformungsinduktionsabschnitt (32) ausgebildet ist, vorzugsweise verformt wird, wenn der Innendruck des Batteriegehäuses auf ein vorbestimmtes Niveau oder mehr ansteigt;
**dadurch gekennzeichnet, dass** die Batteriezelle (1) ferner umfasst:
einen Kollektor (40), der elektrisch mit der Elektrodenanordnung (10) verbunden ist und auf dem Sickenabschnitt (21) des Batteriegehäuses (20) sitzt und mit diesem gekoppelt ist, so dass der Kollektor (40) elektrisch mit dem Batteriegehäuse (20) verbunden ist; und
eine Dichtung (G1), die zwischen dem Batteriegehäuse (20) und der Gehäuseabdeckung (30) angeordnet ist und zwischen dem Kollektor (40) und der Gehäuseabdeckung (30) angeordnet ist.

2. Batteriezelle (1) nach Anspruch 1,
wobei der Verformungsinduktionsabschnitt (32) eine kreisförmige geschlossene Schleife bildet.

3. Batteriezelle (1) nach Anspruch 1 oder 2,
wobei der Entlüftungsabschnitt (31) und der Verformungsinduktionsabschnitt (32) in einem flachen Abschnitt vorgesehen sind, der einen zentralen flachen Bereich der Gehäuseabdeckung (30) bildet.

4. Batteriezelle (1) nach einem der Ansprüche 1 bis 3,
wobei der Verformungsinduktionsabschnitt (32) in einem Bereich zwischen einem Mittelpunkt der Gehäuseabdeckung (30) und einem Punkt vorgesehen ist, der 70 % des Radius der Gehäuseabdeckung (30) entspricht.

5. Batteriezelle (1) nach einem der Ansprüche 1 bis 4,
wobei der Verformungsinduktionsabschnitt (32) in einem Bereich zwischen einem Punkt, der 20 % eines Radius der Gehäuseabdeckung (30) entspricht, und einem Punkt vorgesehen ist, der 60 % des Radius der Gehäuseabdeckung (30) entspricht.

6. Batteriezelle (1) nach einem der Ansprüche 1 bis 5,
wobei eine radiale Länge zwischen dem Verformungsinduktionsabschnitt (32) und dem Entlüftungsabschnitt (31) 10 bis 50 % der radialen Länge der Gehäuseabdeckung (30) beträgt.

7. Batteriezelle (1) nach einem der Ansprüche 1 bis 6,
wobei der Verformungsinduktionsabschnitt (32) einen oberen Verformungsinduktionsabschnitt, der auf einer oberen Oberfläche der Gehäuseabdeckung (30) vorgesehen ist, und/oder einen unteren Verformungsinduktionsabschnitt (32), der auf einer unteren Oberfläche der Gehäuseabdeckung (30) vorgesehen ist, umfasst.

8. Batteriezelle (1) nach Anspruch 7,
wobei der Verformungsinduktionsabschnitt (32) einen oberen Verformungsinduktionsabschnitt, der auf einer oberen Oberfläche der Gehäuseabdeckung (30) vorgesehen ist, und einen unteren Verformungsinduktionsabschnitt (32), der auf einer unteren Oberfläche der Gehäuseabdeckung (30) vorgesehen ist, umfasst.

9. Batteriezelle (1) nach einem der Ansprüche 1 bis 8,
wobei eine Dicke der Gehäuseabdeckung (30) in einem Bereich, in dem der Verformungsinduktionsabschnitt (32) ausgebildet ist, größer ist als die Dicke der Gehäuseabdeckung (30) in dem Bereich, in dem der Entlüftungsabschnitt (31) ausgebildet ist.

10. Batteriezelle (1) nach Anspruch 8,
wobei der obere Verformungsinduktionsabschnitt und der untere Verformungsinduktionsabschnitt (32) in einem versetzten Zustand vorgesehen sind.

11. Batteriezelle (1) nach einem der Ansprüche 1 bis 10,
wobei der Entlüftungsabschnitt (31) und der Verformungsinduktionsabschnitt (32) als Nuten oder Kerben ausgebildet sind, die in der Gehäuseabdeckung (30) vorgesehen sind.

12. Batteriepack (3), umfassend mindestens eine Batteriezelle (1) nach einem der Ansprüche 1 bis 11.

13. Fahrzeug (5), umfassend mindestens ein Batteriepack (3) nach Anspruch 12.

## Revendications

1. Cellule de batterie (1) comprenant :
un ensemble d'électrodes (10) comprenant une première électrode, une deuxième électrode, et un séparateur intercalé entre elles ;
un boîtier de batterie (20) configuré pour recevoir l'ensemble d'électrodes (10) à travers une ouverture pratiquée sur un côté ;
un couvercle de boîtier (30) couvrant l'ouverture du boîtier de batterie (20) ;
le boîtier de batterie (20) comprenant :
une partie de moulure (21) formée à un bout du boîtier de batterie (20) adjacent à l'ouverture, et
une partie de sertissage (22) formé sur la partie de moulure (21) et pliée de façon à entourer un bord du couvercle de boîtier (30) afin de fixer un couvercle de boîtier (30) sur la partie de moulure (21) ; et
le couvercle de boîtier (30) comprenant :
une partie d'évacuation (31) configurée pour se rompre en cas d'augmentation de la pression interne du boîtier de batterie jusqu'à un niveau prédéterminé ou au-delà, et
une partie d'induction de déformation (32) espacée d'une distance prédéterminée de la partie d'évacuation (31) dans le sens radial, et agencé vers l'intérieur depuis la partie d'évacuation (31) dans le sens radial, la partie d'induction de déformation (32) étant configurée pour induire une déformation préférentielle du couvercle de boîtier (30) dans une zone où la partie d'induction de déformation (32) est formée en cas d'augmentation de la pression interne du boîtier de batterie jusqu'à un niveau prédéterminé ou au-delà ;
**caractérisée en ce que** la cellule de batterie (1) comprend en outre :
un collecteur (40) connecté électriquement à l'ensemble d'électrodes (10), posé et couplé sur la partie de moulure (21) du boîtier de la batterie (20) de sorte que le collecteur (40) soit connecté électriquement au boîtier de la batterie (20) ; et
une garniture d'étanchéité (G1) intercalée d'une part entre le boîtier de la batterie (20) et le couvercle de boîtier (30), d'autre part entre le collecteur (40) et le couvercle de boîtier (30).

2. Cellule de batterie (1) selon la revendication 1,
la partie d'induction de déformation (32) formant un circuit fermé circulaire.

3. Cellule de batterie (1) selon la revendication 1 ou 2,
la partie d'évacuation (31) et la partie d'induction de déformation (32) étant agencées sur une partie plate, à savoir une zone plate centrale du couvercle de boîtier (30).

4. Cellule de batterie (1) selon une des revendications 1 à 3,
la partie d'induction de déformation (32) étant agencée dans une zone située en un point central du couvercle de boîtier (30) et un point correspondant à 70% du rayon du couvercle de boîtier (30).

5. Cellule de batterie (1) selon une des revendications 1 à 4,
la partie d'induction de déformation (32) étant agencée dans une zone située entre un point correspondant à 20% d'un rayon du couvercle de boîtier (30) et un point correspondant à 60% du rayon du couvercle de boîtier (30).

6. Cellule de batterie (1) selon une des revendications 1 à 5,
une longueur radiale entre la partie d'induction de déformation (32) et la partie d'évacuation (31) mesurant de 10 à 50% de la longueur radiale du couvercle de boîtier (30)

7. Cellule de batterie (1) selon une des revendications 1 à 6,
la partie d'induction de déformation (32) comprenant au moins une d'une partie d'induction de déformation supérieure agencée sur une surface supérieure du couvercle de boîtier (30) et d'une partie d'induction de déformation inférieure (32) agencée sur une surface inférieure du couvercle de boîtier (30).

8. Cellule de batterie (1) selon la revendication 7,
la partie d'induction de déformation (32) comprenant une partie d'induction de déformation supérieure agencée sur une surface supérieure du couvercle de boîtier (30) et une partie d'induction de déformation inférieure (32) agencée sur une surface inférieure du couvercle de boîtier (30).

9. Cellule de batterie (1) selon une des revendications 1 à 8,
une épaisseur du couvercle de boîtier (30) dans une zone dans laquelle la partie d'induction de déformation (32) est formée étant supérieure à l'épaisseur du couvercle de boîtier (30) dans la zone dans laquelle la partie d'évacuation (31) est formée.

10. Cellule de batterie (1) selon la revendication 8,
la partie d'induction de déformation supérieure et la partie d'induction de déformation inférieure (32) étant agencées en quinconce.

11. Cellule de batterie (1) selon une quelconque des revendications 1 à 10, la partie d'évacuation (31) et la partie d'induction de déformation (32) étant formées sous forme de cannelures ou d'encoches agencées dans le couvercle de boîtier (30).

12. Bloc-batterie (3) comprenant au moins une cellule de batterie (1) selon une quelconque des revendications 1 à 11.

13. Véhicule (5) comprenant au moins un bloc-batterie (3) selon la revendication 12.
